# EUROPEAN PATENT APPLICATION

(11) **EP 4 700 675 A1**
(43) Date of publication of application: **25.02.2026**
(21) Application number: 25197296.4
(22) Date of filing: 21.08.2025
(51) Int. Cl.: G06Q 10/08, G06Q 10/087

(54) **PERISHABLE PRODUCT TRACKING AND MANAGEMENT**

(30) Priority: 22.08.2024 US 202418812944
(71) Applicant: Baldor Technology LLC, Bronx, New York 10474 (US)
(72) Inventor: PARAMESWARAN, Sathiyan, New Jersey, 07950 (US); MURPHY, Thomas, New York, 10012 (US); LOPES, Eurico, New York, 10605 (US); GOTTLIEB, Seth, New York, 10065 (US)
(74) Representative: Marks & Clerk LLP

(57) **Abstract**

Systems and methods for managing perishable product inventory at a facility. One system includes a radio frequency identification (RFID) tag, the RFID tag associated with at least one perishable product and storing a unique identifier of the at least one perishable product. The system further includes an electronic communications device including an RFID scanner and an electronic processor. The electronic processor is configured to receive, via the RFID scanner, the unique identifier from the RFID tag, identify, from the received unique identifier, expiration information for the at least one perishable product, and perform a mitigation action in response to identifying the at least one perishable product is expired based on the expiration information.

## Description

### BACKGROUND

Systems and methods described herein relate to product inventory management and, more particularly, to RFID-based inventory management systems and methods for managing the tracking of and shipping of perishable products.

### SUMMARY

Storage facilities (for example, warehouses) store products until those products need to be shipped to a destination. Some of these products may be perishable items, and therefore should not be stored for extended periods of time. As there are hundreds of varieties of perishable products from potentially different manufacturers and a storage facility may store hundreds if not thousands of instances of a particular product (e.g., thousands of packages of a particular brand and type of cheese), it because difficult to track and manage inventories, including managing product expiration.

Also, when a product is needed to complete an order, the necessary product must be located within the storage facility, packaged, and loaded for transport. A delivery or transport vehicle picks up the particular product (along with any other products in the order) and delivers the order including the product at a desired location (for example, a store, a manufacturing line, a loading bay, etc.).

Asset management and tracking systems may be employed in storage facilities to track products and verify order fulfillment. Such systems may use barcodes to track inventories, but such systems require that each barcode is actively scanned, which may be overlooked by workers (i.e., order pickers) or performed inconsistently. Other management and tracking systems may include radio frequency identification (RFID) tags storing information specific to a particular product (e.g., an identifier) and coupled directly to a particular product or to a vessel containing the particular product. While such tags and associated information may help locate a product for order fulfillment, such tags and associated information, perishable products (for example, produce, packaged and canned food and consumables, medicines, and the like) have a limited shelf life and expiration information is also an important part of order fulfillment and delivery. If such information is not properly managed, orders may inadvertently include expired products.

Thus, it may be desirable to have a product management system that addresses the perishable aspect of certain products so that enterprises efficiently provide reliable, quality products and avoid wasted resources (e.g., computing resources, delivery resources, etc.) addressing order rejections, returns, and replacement.

Accordingly, in various implementations, systems and methods described in this disclosure provide product management system for tracking expired perishable products. For example, examples described herein use RFID tag information to track expiration information (e.g., shelf life or expiration dates) of products. Examples described herein also track expiration information multiple stage of product storage and order fulfillment (for example, verification of inventory, order preparation, order delivery, etc.) to ensure proper order fulfillment and avoid wasted resources addressing expired products.

One example provides for a product inventory management system for a facility. The system RFID tag, the RFID tag associated with at least one perishable product and storing a unique identifier of the at least one perishable product. The system further includes an electronic communications device including an RFID scanner and an electronic processor. The electronic processor is configured to receive, via the RFID scanner, the unique identifier from the RFID tag, identify, from the received unique identifier, expiration information for the at least one perishable product, and perform a mitigation action in response to identifying the at least one perishable product is expired based on the expiration information.

Another example provides electronic communications device for product inventory management for a facility. The electronic communications device includes RFID scanner, and an electronic processor. The electronic processor is configured to receive, via the RFID scanner, a unique identifier from the RFID tag, the unique identifier corresponding to at least one perishable product, identify, from the received unique identifier, expiration information for the at least one perishable product, and perform a mitigation action in response to identifying the at least one perishable product is expired based on the expiration information.

Yet another example provides a method for product inventory management for a facility. The method includes receiving, via a RFID scanner, a unique identifier from an RFID tag, the RFID tag storing a unique identifier corresponding to at least one perishable product, identifying, from the received unique identifier, expiration information for the at least one perishable product, and performing a mitigation action in response to identifying the at least one perishable product is expired based on the expiration information.

Other aspects of the invention will become apparent by consideration of the detailed description and accompanying drawings.

### BRIEF DESCRIPTION OF THE DRAWINGS

The accompanying figures, where like reference numerals refer to identical or functionally similar elements throughout the separate views, which together with the detailed description below are incorporated in and form part of the specification and serve to further illustrate various examples of concepts that include the claimed invention, and to explain various principles and advantages of those examples.
FIG. 1 is product inventory management system in accordance with some examples.
FIG. 2 is a block diagram of an electronic communications device of the system of FIG. 1 in accordance with some examples.
FIG. 3 is a block diagram of a server of the system of FIG. 1 in accordance with some examples.
FIG. 4 is a flowchart illustrating a method for managing a perishable product as implemented by the electronic communications device of FIG. 2, in accordance with some examples.
FIG. 5 is a diagram illustrating a method for managing product storage and order fulfillment and delivery as implemented by the electronic communications device of FIG. 2, in accordance with some examples.

Skilled artisans will appreciate that elements in the figures are illustrated for simplicity and clarity and have not necessarily been drawn to scale. For example, the dimensions of some of the elements in the figures may be exaggerated relative to other elements to help to improve understanding of examples, aspects, and features illustrated.

In some instances, the apparatus and method components have been represented where appropriate by conventional symbols in the drawings, showing only those specific details that are pertinent to understanding the of various examples, aspects, and features so as not to obscure the disclosure with details that will be readily apparent to those of ordinary skill in the art having the benefit of the description herein.

### DETAILED DESCRIPTION

Before any implementations of the invention are explained in detail, it is to be understood that the invention is not limited in its application to the details of construction and the arrangement of components set forth in the following description or illustrated in the following drawings. The invention described herein is capable of other implementations and of being practiced or of being carried out in various ways.

For ease of description, some or all of the example systems presented herein are illustrated with a single exemplar of each of its component parts. Some examples may not describe or illustrate all components of the systems. Other examples may include more or fewer of each of the illustrated components, may combine some components, or may include additional or alternative components.

As used herein, the term "product" refers to any kind of physical good capable of being moved from one location to another (for example, a commercial, consumer, or industrial product). The term "perishable product" refers to any kind of physical good having a fixed lifetime after which they are considered unsuitable for utilization. Examples of perishable products include, but are not limited to, consumable goods, such as agricultural produce and dairy products, and pharmaceuticals. The term "facility" used herein refers to any kind of building infrastructure (for example, a warehouse, an office building, a hospital, a retail store, a grocery store, a supercenter, and the like).

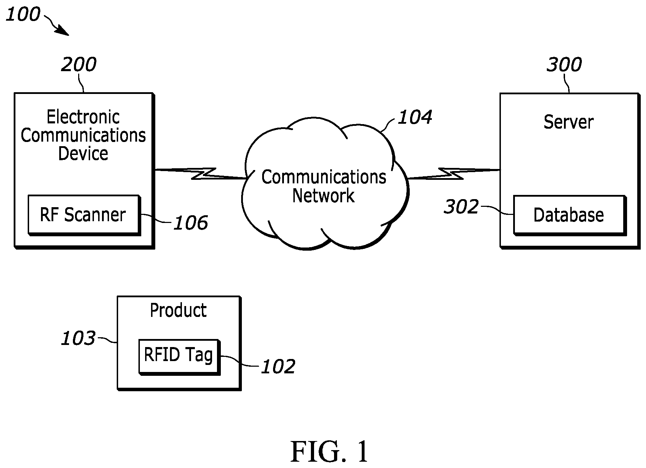

FIG. 1 illustrates a product inventory management system 100. The system 100 includes at least one radio frequency identification (RFID) tag 102, an electronic communications device 200 (also referred to herein as a tag reader, which may be a hand-held device or may be mounted on a wall or other structure within a facility), and a server 300. It should be understood that the system 100 is provided as an example and, in some examples, the system 100 may include additional components. For example, the system 100 may include one or more electronic communications devices 200 and/or servers 300. The related methods described herein may be applied to more than one electronic communications device 200 and/or more than one RFID tag 102 concurrently.

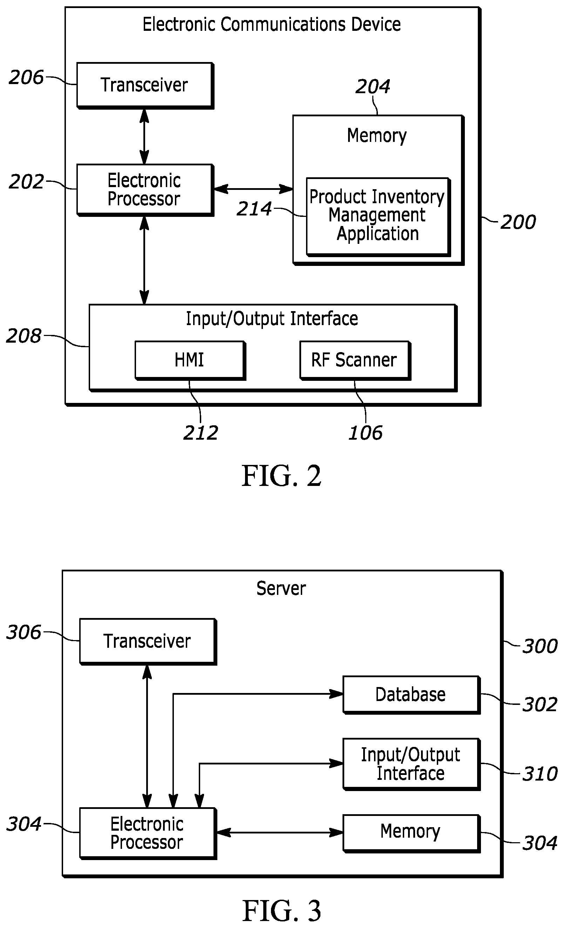

Each RFID tag 102 is associated with at least one perishable product 103 within a facility (for example, a storage warehouse, a product store or manufacturing line, or the like). Each RFID tag 102 stores information (readable by the electronic communications device 200) identifying product information of the particular perishable product. The product information includes expiration information (for example, of the perishable product 103). The electronic communications device 200 (described in more detail below with respect to FIG. 2) is configured communicate with the RFID tag 102 to receive the stored information via an RFID scanner 106. In some examples, the stored information includes product information, such as an identifier, may be used by the electronic communications device 200 to access additional information regarding an associated product (e.g., through the server 300, which may be act as a database storing information regarding products). Alternatively or in addition, the product information stored in the RFID tag 102 may directly include information about a product, such as, for example, a name, a receipt date and/or time, a storage location, a description, expiration information, or the like.

As noted above, each RFID tag 102 stores product information of the particular perishable product 103, an identifier for retrieving the same, or a combination thereof. For example, in some embodiments, each RFID tag 102 stores a unique identifier for the associated perishable product, wherein the unique identifier includes a global unique identifier (GUID) (for example, a random generally or sequentially-generated number or identifier) and an electronic product code (EPC). The GUID may be generated by the producer or other entity involved in the distribution of the product and may be stored in (programmed into) an RFID tag as applied to a product by such an entity. The ECP may be generated by the storage facility and either added to an existing RFID tag as supplied by the producer/provider of the product or combined with GUID and stored in an RFID tag as supplied or applied at the storage facility. In some examples, the EPC includes a stock-keeping unit (SKU), a receipt date/time (at the storage facility), a receiving door/bay (at the storage facility), location information (e.g., where the product will be stored or shelved at the storage facility), a primary manufacturer, a secondary manufacturer, a handling history, or combinations of the same. In some embodiments, the EPC also includes expiration information (e.g., an expiration data or a shelf life). However, in some examples, this information is stored (e.g., in the database 302) as part of a record for the product, which is uniquely identifiable using the EPC and GUID combination. Other information stored in such a record can include a proximity boundary, order information (when the product is picked as part of an order), and the like.

The at least one RFID tag 102 include either or both of an active RFID tag and a passive RFID tag. An active RFID tag is an electronic device configured to actively (e.g., periodically broadcast) information according to a particular communications protocol or modality (for example, Wi-Fi). A passive RFID tag is configured to be read via an RFID scan performed by another device. The RFID tag 102, in some examples, is positioned on (for example, physically attached, coupled, or integrated into) the perishable product 103 in which it is associated with. In some examples, the RFID tag 102 is positioned on a container holding the perishable product 103 in which it is associated with (for example, a storage bin or a shelf).

In the illustrated example, the electronic communications device 200 (described in more detail below with respect to FIG. 2) is communicatively coupled to the server 300 over a communications network 104. Each communication link may be wired or implemented wirelessly, for example, using a wide area network, such as the Internet, a Long Term Evolution (LTE) network, a Global System for Mobile Communications (or Groupe Spécial Mobile (GSM)) network, a Code Division Multiple Access (CDMA) network, an Evolution-Data Optimized (EV-DO) network, an Enhanced Data Rates for GSM Evolution (EDGE) network, a 3G network, a 4G network, a local area network, for example a Wi-Fi network, a personal area network, for example a Bluetooth^{™} network, and combinations or derivatives thereof.

The electronic communications device 200 is configured to receive product information stored within the at least one RFID tag 102 via an RFID scanner 106 (i.e., read the unique EPC and GUID combination from the tag 102). As illustrated in FIG. 1, (and explained below in more detail below), the electronic communications device 200 also communicates with the server 300 to, for example, provide product information retrieved from one or more of the RFID tags 102 via the RFID scanner 106, which may be used by the server 300 and/or the device 200 to detect expired perishable products. In some examples, the server 300 is also configured to receive and store orders for perishable products 103. In such examples, the server 300 may also be configured to provide order information and/or additional product information (for example, expiration data as explained in more detail below) to the electronic communications device 200 based on, for example, a detected unique identifier information of a product 103 received from the electronic communications device 200.

In should be understood that additional servers, networks, and devices may also communicate with the components of the system 100 over the communications network 104. For example, in some examples, the server 300 may be further configured to communicate with one or more of other computing devices (e.g., servers and/or databases) associated with a facility.

The server 300 may further be communicatively coupled to a database 302, which, consequently, may be communicatively coupled to and accessible by the electronic communications device 200. In alternative examples, the database 302 is part of a cloud-based database system external to the system 100 and accessible by the electronic communications device 200 and the server 300 over one or more additional networks. Also, in some examples, all or part of the database 302 is locally stored on the server 300. In some examples, the database 302 electronically stores one or more records of products (including the perishable product(s) 103), each record including product information regarding the particular product, such as the unique identifier (EPC and GUID) and associated expiration information. It should be understood that, in some examples, the data stored in the database 302 is distributed among multiple databases that communicate with the server 300. In some examples, some or all functionality of the server 300 described herein is alternatively integrated into the electronic communications device 200.

Referring to FIG. 2, the electronic communications device 200 includes an electronic processor 202, a memory 204, a transceiver 206, an input/output interface 208, and the RFID scanner 106 communicating over one or more control and/or data buses. The electronic processor 202, in coordination with instructions and data stored in the memory 204, is configured to implement, among other things, the methods described herein. As previously noted, the electronic communications device 200 may be a mobile device (carried by a worker, who may be a human or a robot or drone) or may be mounted to a structure within the storage facility. In some embodiments, the electronic communications device 200 may be a tablet or smart phone.

In some examples, the electronic processor 202 is implemented as a microprocessor with separate memory, such as the memory 204. In other examples, the electronic processor 202 may be implemented as a microcontroller (with the memory 204 on the same chip). In other examples, the electronic processor 202 may be implemented using multiple processors. In addition, the electronic processor 202 may be implemented partially or entirely as, for example, a field-programmable gate array (FPGA), an application specific integrated circuit (ASIC), and the like and the memory 204 may not be needed or be modified accordingly.

In the example illustrated, the memory 204 includes non-transitory, computer-readable memory that stores instructions that are received and executed by the electronic processor 202 to carry out the functionality of the electronic controller 202 described herein. The memory 204 may include, for example, a program storage area and a data storage area (not shown). The program storage area and the data storage area may include combinations of different types of memory, such as read-only memory (ROM) and random-access memory (RAM). The electronic processor 202, in coordination with the memory 204, is configured to implement, among other things, the methods described herein.

The transceiver 206 enables wired and/or wireless communication between the electronic communications device 200 and the server 300 over the communication network 104. In some examples, the transceiver 206 may comprise separate transmitting and receiving components (for example, a transmitter and a receiver).

The input/output interface 208 may include one or more input mechanisms (for example, a touch pad, a keypad, and the like), one or more output mechanisms (for example, a display, a speaker, and the like), or a combination thereof, or a combined input and output mechanism such as a touch screen. For example, in the illustrated example, the input/output interface 208 includes a human machine interface (HMI) 212. The HMI 212 provides visual output, such as, for example, graphical indicators (i.e., fixed or animated icons), lights, colors, text, images, combinations of the foregoing, and the like. The HMI 212 includes a suitable display mechanism for displaying the visual output, such as, for example, on an electronic display (for example, a touch screen, or other suitable mechanisms). The display is a suitable display (e.g., a liquid crystal display (LCD) touch screen, an organic light-emitting diode (OLED) touch screen, and the like). In some instances, the HMI 212 displays a graphical user interface (GUI) (for example, generated by the electronic controller 102 and presented on the display) that enables a user to interact with one or more systems (and components thereof) the system 100. The HMI 212 may also provide audio output to the user such as a chime, buzzer, voice output, or other suitable sound through a speaker included in the HMI 212 or separate from the HMI 212. In some instances, HMI 212 provides a combination of visual, audio, and haptic outputs. In some examples, the HMI 212 is implemented on a separate electronic device of a user. The electronic device may be any kind of computing device such as a laptop, tablet, or a smart phone.

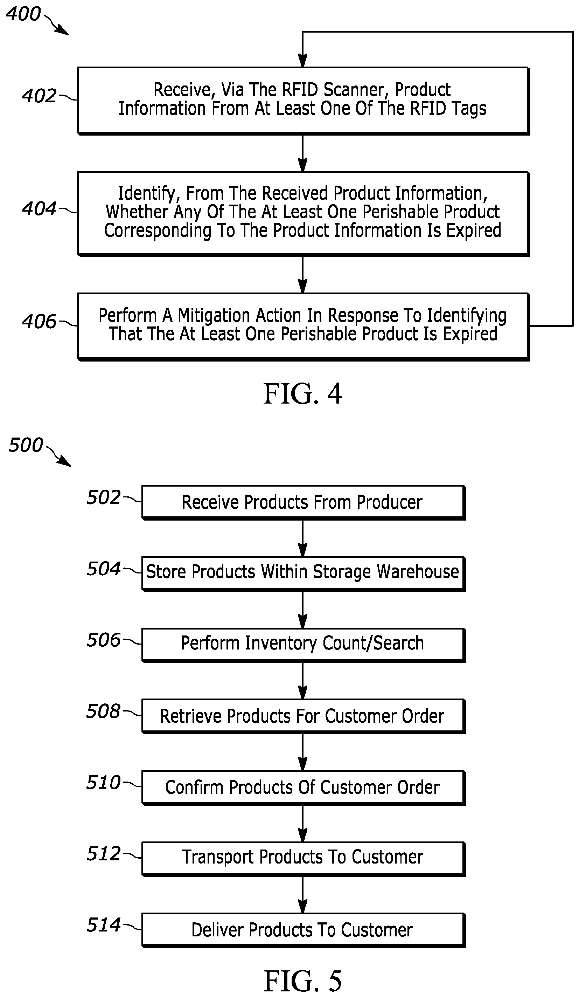

In some examples, the electronic communications device 200 stores a product inventory management application 214 that, when executed, tracks information relating to the one or more perishable products 103, such as functionality described herein with respect to FIGS. 4 and 5. The product inventory management application 214 may be a dedicated application for interacting with the system 100. Alternatively, the application 214 may be a general-purpose browser application, such that the functionality described herein as being performed via the electronic communications device 200 (as executing the application 214) may be provided in a hosted service configuration via the server 300.

The RFID scanner 106 is a radio frequency scanner configured to detect RFID tags (for example, the RFID tag 102) within proximity of the scanner 106. The RFID scanner 106 may be an active scanning device that performs scans automatically (for example, at periodically at a predetermined rate) or in response to a manual input from a user (for example, via the input/output interface 208). In some examples, the RFID scanner 106 is a passive scanning device that receives information actively broadcasted by an active RFID tag. In some examples, the RFID scanner 106 is configured to perform both active and passive RFID scanning techniques. The RFID scanner 106, in some examples, is a detection wand.

FIG. 3 schematically illustrates one example of the server 300. In the illustrated example, the server 300 includes an electronic processor 304, a memory 306, a transceiver 308, and an input/output interface 310. The electronic processor 304, the memory 306, the transceiver 308, and the input/output interface 310 include similar components and operate similar to the electronic processor 202, the memory 204, the transceiver 206, and the input/output interface 208, respectively, and therefore, for sake of brevity, are not explicitly described herein. However, it should be noted that the electronic processor 304, in combination with instructions and data stored in the memory 306, the transceiver 308, and the input/output interface 310, in some examples, is configured to implement at least part of the methods and functionality described with respect to FIGS. 4 and 5 below.

In some examples, as described above, the server 300 may further include or communicate with a database 302. In some examples, some or all of the memory 306 (and functionality thereof) is integrated into the database 302. The database 302 is configured to store, among other things, product information received from the electronic communications device 200. The database 302 may be configured to store additional information (for example, orders for particular perishable products 103).

The system 100 tracks the perishable product 103 via the associated RFID tag 102. For example, as described herein, the electronic communications device 200 can read an RFID tag 102 during various stage of storage management and order fulfillment and delivery to track a storage location, ensure freshness (e.g., identified expired products), ensure the product is included in an appropriate order, and ensure a product arrives at an appropriate destination. For example, using the product information stored in the tag 102 (the GUID and EPC), the electronic communications device 200 can (directly from the received product information or through access to an associated database record, for example, of the server 300) identify whether a perishable product 103 has expired and take an appropriate mitigation action, such as remove the perishable product 103 from a shelf and disposing of the item, removing and replacing a perishable product 103 from an order being fulfilled, or requesting a replacement perishable product 103 from an in-transit or delivered order.

For example, FIG. 4 is a flowchart illustrating an example method 400 for product inventory management in accordance with some examples and, in particular, performs a quality or freshness check for a product based on a scanned RFID tag and associated expiration information. The method 400 is described herein as being performed by the electronic communications device 200 (in particular, the electronic processor 202). However, portions of the method 400 may be distributed among multiple devices (e.g., one or more additional controllers/processors of or connected to the system 100 such as the server 300) and applied to more than one RFID tag at the same or at different times.

At block 402, the electronic processor 202 receives, via the RFID scanner 106, a unique identifier corresponding to at least one perishable product (for example, the perishable product 103) from at least one RFID tag 102. At block 404, the electronic processor 202 identifies, from the received unique identifier, expiration information for the at least one perishable product 103. For example, the processor 202 may compare an expiration date of the perishable product 103 with a present date to determine whether the expiration date of the product has passed. As another example, the processor 202 may determine, based on the product information, how long the perishable product 103 has been stored (whether at a storage warehouse or at a destination facility) and whether the length of time in which the perishable product 103 has been stored exceeds a shelf life of the perishable product 103. As noted above, the electronic processor 202 may perform this functionality using information obtained directly from scanning the RFID tag 102 or by using the product information obtained from the RFID tag 102 to access an associated database record that may store, for example, expiration information for the product (for example, at the server 300 and, in particular, the database 302). Regardless of whether the electronic processor 202 receives information from an external database record of the product, the electronic processor 202 may be configured to transmit information for storage in the database record as part of performing the freshness check (for example, at the server 300). The transmitted information may include a date and time of performing the check (e.g., for audit trail purposes), an identifier of device or worker performing the check (e.g., the electronic communications device 200), as well as a result of the check. For example, if a product 103 part of the check is identified as being expired, the electronic processor 202 may transmit information regarding what mitigation action (block 406 described below) was performed (e.g., where the product was disposed of or moved).

At block 406, the electronic processor 202 performs a mitigation action in response to identifying that the at least one perishable product 103 is expired based on the expiration information. The mitigation action may include, for example, generating an alert (for example, via the input/output interface 208) to a user, the alert including information regarding the at least one perishable product 103 that is expired. The alert may be an audible and/or visual alert (for example, displayed and output by the HMI 212). In some examples, the alert may include instructions regarding where or how the product should be disposed of and, in some examples, may include instructions for retrieving and moving the product to a new location.

In some examples, the above freshness check is performed passively such that individual RFID tags 102 to not need to be actively scanned by a worker via the electronic communications device 200. For example, as a worker (human, robot, drone, etc.) transverses the storage location, the electronic communications device 200 may actively scan for RFID tags and/or the RFID tags may be active tags that are read by the electronic communications device 200. Accordingly, in this configuration, the freshness check is performed for each and every RFID tag 102 within range of an electronic communications device 200 without needing an intentional act to read a particular RFID tag 102 (although such an intentional read could also be performed as desired or as part of an inventory management process or audit).

As described in more detail below, in some examples, the electronic processor 202 is further configured to identify whether the at least one perishable product 103 as part of performing order fulfillment. In such examples, the mitigation action may include an alert (if the order has not yet left for delivery), instructions for replacement of the product, and/or the submission of a replacement product (e.g., if the order is in transit or has been delivered).

In addition to the freshness check described above, the RFID tags 102 can be used at various times during the lifecycle of a product to track a product from receipt to order fulfillment and delivery. For example, FIG. 5 is a process flow diagram 500 illustrating various stages of order fulfillment as implemented with the system 100 in accordance with some examples. At block 502, at a storage warehouse, a plurality of perishable products (for example, perishable product 103) are received (e.g., from a producer). The RFID tags 102 are applied to the respective products 103 (or containers holding the particular product) by the producer or other entity involved in the distribution prior to the perishable products 103 being provided to the storage warehouse facility. Alternatively or additionally, in some examples, the RFID tags 102 are applied at the storage warehouse. In some examples, each RFID tag stores a globally unique identifier (GUID), which may be generated by a provider or other entity involved in the distribution, and an electronic product code (EPC), which may be generated by the storage entity. The EPC may include a combination of a SKU, a receipt date/time (at the storage facility), a receiving door/bay (at the storage facility), and a designated storage location. Thus, the EPC in combination with the GUI represents a unique code or identifier for an individual product (e.g., an individual jar, box, container, package, etc.) such that even if the storage facility receives 1,000 jars of the same jam from the same producer, the RFID tag 102 applied to each jar is unique. In some examples, the RFID tags are applied to a product via an adhesive label. Each RFID tag 102 may be programmed by interfacing with the electronic communications device 200 or a separate computing device (workstation) at the storage facility. In addition to generating the EPC, additional attributes of the product, such as expiration information (expiration date and/or shelf life), proximity boundary, etc. are stored (in the database 302) and associated with the EPC and associated GUID to create a unique database record for each product managed by the storage warehouse.

At the warehouse, each of the perishable products 103 are stored on shelves and/or containers (block 504). The shelves and/or bins may also include barcodes, RFID tags (passive), or the like that contain location information. A storage warehouse worker (for example, a human or a robot) may scan the barcode or RFID tag of the shelf/container upon storing the perishable products 103 on/within them (e.g., via a scanner, such as the scanner 106 included in the electronic communications device 200) to confirm and store the location of the perishable products 103 within the warehouse. Such information may be stored, for example, within the database 302 of the server 300 as part of a unique record for the appropriate product (identified via the assigned RFID tag and EPC/GUID combination). In response to detecting that a product is not placed in the right location (differing from a designated location stored in the database record for the product or as identified as part of the EPC), one or more mechanical (tactile), audible, and/or visual alerts may be generated. In some embodiments, one or more RFID scanning devices (included within or separate from the electronic communications device 200) may be positioned and configured to detect unauthorized removal of one or more products based on detection of corresponding RFID tag information, for example, at one or more entrance/exits of the storage facility.

While stored at the warehouse, a storage warehouse worker may perform a "sweeping" inventory count or search (block 506) via the electronic communications device 200. The worker uses the device 200 to read RFID tags and determine (from the data stored on the tag or associated database records) whether any of the stored products 103 (within proximity of the device 200) are expired (for example, according to the method 400 of FIG. 4 above). The worker, upon being alerted by the device 200 of any expired products 103 (e.g., via a tactile, visual, and/or audible alert), may accordingly remove and properly dispose and/or replace the particular expired products 103. In addition to detection of expired products, the electronic communications device 200 may further be configured to determine an inventory count of the perishable products 103 based on the received product information from the detected RFID tags and may be configured to automatically generate replacement orders in response to remaining inventors (after removal of identified expired products) reaching a particular level. Such orders may be automatically submitted for fulfillment with a producer and/or may be provided to one or more users for verification and approval.

In response to receiving an order (for example, from the server 300 or another source), the order may be assigned to a particular storage warehouse worker and, consequently, provided to the worker's electronic communications device 200, which the worker uses to locate, check, and confirm products to complete the order (block 508). In particular, the electronic communications device 200 may detect perishable products 103 included in an order based on the detected product information. Accordingly, similar to monitoring for product quality while products are shelved, the electronic communications device 200 is further configured to determine whether the perishable product 103 is expired as part of order fulfillment and generate an alert accordingly (as described above).

The electronic communications device 200 is used by the worker, at block 510, to verify that all the perishable products 103 for the order are collected and that none are missing or expired based on the received product information. For example, an order received at the electronic communications device 200 lists SKUs and associated EPC codes that need to be picked. The system 100, from the EPC codes, can identify the locations for all products and the worker (picker/robot/drone) traverses the warehouse to the specified location. The RFID scanner 106 is used to ensure that correct products are picked up and that no picked products are expired. If incorrect products (expired products or products not matching an order) are picked up, appropriate alerts are generated to avoid mis-selection of products and/or incompletion of the order.

An additional check may be performed at a loading of the products onto a vehicle for transportation to a destination (block 512) to ensure all of the appropriate products are not expired and included for the order based on the received RFID information. The RFID scanner 106 is used to ensure that correct products are picked up, that no products are missing, and that none of the picked products are expired. If incorrect products (expired products or products not matching an order) are picked up or are missing, appropriate alerts are generated to avoid mis-selection of products. Palletized, shrink-wrapped items may receive another RFID label that identifies the order in the EPC code.

The RFID tags 102, as described above, on the containers and the palletized products are associated with a predetermined route to the destination to fulfill the order. In some embodiments, a vehicle in which the products for the order are stored in include at least one RFID tag storing identification information of the particular vehicle (for example, a vehicle or truck number). A scanning device (for example, of the electronic communications device 200 or a separate scanning device positioned within the vehicle) is configured to receive the identification information of the vehicle stored in the RFID tag and associate the vehicle with the predetermined route and order. Again, a check to verify that the proper products for an order are complete and do not include any expired products may be performed upon loading of the product(s) onto the vehicle. Following verification of the order, an identifier stored in the RFID tag for the product(s) (and/or a container containing the products for the order) may be scanned and assigned a particular route to the destination.

During transport of the perishable products 103 for the order to a destination (facility) the electronic communications device 200 may again be used to retrieve product information from the perishable products 103 of the order to, for example, verify their location. If incorrect products (expired products or products not matching an order) are picked up or are missing, appropriate alerts are generated to avoid mis- selection of products and/or incompletion of the order. A user (for example, a driver of the vehicle) may view a location of the particular order and/or product (via a user application, for example, employed and displayed on the electronic communications device 200) and other scanned products/orders based on collected RF information. For example, a driver can select the product/order they are trying to locate and the RFID scanners (for example, of the electronic communications device 200 and/or scanning devices of the vehicle(s)) will perform a search mode to look for the particular EPC code of the RFID label associated with the order within the vehicle. In some examples, the electronic communications device may generate an alert to indicate to the driver when they are within a particular, predetermined proximity of the particular product/order. The proximity may be determined, for example, based on a signal strength and/or duration in which the RFID tag associated with the product/order is detected. Such a searching function allows for a user to locate a desired product/order without performing additional manual scans of other products within the vehicle.

When the driver delivers the order at the destination facility (block 514), the RFID scanner (for example, of the electronic communications device 200 or a scanning device within the vehicle) counts and verifies the products that are delivered for completeness of the order and check freshness of the merchandise. If incorrect products (expired products or products not matching an order) are picked up or are missing, appropriate alerts are generated to avoid mis-selection of products and/or incompletion of the order. RFID scanning devices inside the vehicle (for example, of the electronic communications device 200 or of a separate scanning device of the vehicle) scans RFID tag information to monitor the products that enter and leave the vehicle. Upon detection of a particular product leaving the vehicle while the vehicle is not at the delivery location (for example, based on a global positioning system (GPS) information), appropriate alerts are generated for user intervention.

The electronic communications device 200 may further be configured to monitor the received products 103 following receipt or at time of delivery. In some examples, as described above, the electronic communications device 200 may be configured to read RFID tags of products at a destination facility and use the RFID tags to confirm that the delivered order is complete and generate an alert upon determining that one or more products 103 have expired or are missing (and potentially prevent the order or a portion thereof from being marked delivered in such a situation). Similarly, the electronic communications device 200 may automatically generate a replacement order for expired products (similar to how replacement orders may be generated as described above as part of inventory management). In addition, the electronic communications device 200 may further be configured to monitor an inventory level of the perishable product 103 (as ordered for a particular destination) and generate one or more orders for replacement products 103 in response to detecting a low inventory level (for example, due to one or more expired products 103 exceeding a predetermined number or percentage). Users (e.g., associated with the destination facility) may be able to access the product information collected by the electronic communications device 200, for example, via the application 214. Through the application 214, the users may verify the orders generated automatically by the electronic communications device 200.

Accordingly, example systems and methods described herein use unique RFID tag on individual products to track storage locations, track quality (e.g., freshness while stored), perform order fulfillment and order completeness and quality checks (including through the packing and dispatching of an order), and delivery tracking and verification. By using active scanning, the tracking and management functions are not subject to human error or oversight as the RFID tags can be passively scanned to automatically identify the presence of a particular product and whether any type of action needs to be taken. Information tracked through these processes can similarly be used to assist with food recalls and more precise information regarding the overall product distribution cycle, which represents valuable information for many aspects of the logistics industry - especially industries relating to food and other perishable products.

In the foregoing specification, specific implementations have been described. However, one of ordinary skill in the art appreciates that various modifications and changes can be made without departing from the scope of the invention as set forth in the claims below. Accordingly, the specification and figures are to be regarded in an illustrative rather than a restrictive sense, and all such modifications are intended to be included within the scope of present teachings.

In this document, relational terms such as first and second, top and bottom, and the like may be used solely to distinguish one entity or action from another entity or action without necessarily requiring or implying any actual such relationship or order between such entities or actions. The terms "comprises," "comprising," "has," "having," "includes," "including," "contains," "containing" or any other variation thereof, are intended to cover a non-exclusive inclusion, such that a process, method, article, or apparatus that comprises, has, includes, contains a list of elements does not include only those elements but may include other elements not expressly listed or inherent to such process, method, article, or apparatus. An element proceeded by "comprises ...a," "has ... a," "includes ...a," or "contains ...a" does not, without more constraints, preclude the existence of additional identical elements in the process, method, article, or apparatus that comprises, has, includes, contains the element. The terms "a" and "an" are defined as one or more unless explicitly stated otherwise herein. The terms "substantially," "essentially," "approximately," "about" or any other version thereof, are defined as being close to as understood by one of ordinary skill in the art, and in one non-limiting example the term is defined to be within 10%, in another example within 5%, in another example within 1% and in another example within 0.5%. The term "coupled" as used herein is defined as connected, although not necessarily directly and not necessarily mechanically. A device or structure that is "configured" in a certain way is configured in at least that way but may also be configured in ways that are not listed.

It should also be noted that a plurality of hardware and software-based devices, as well as a plurality of different structural components may be utilized to implement the implementations provided herein. It should also be noted that a plurality of hardware and software-based devices, as well as a plurality of different structural components may be used to implement the invention. In addition, it should be understood that implementations may include hardware, software, and electronic components or modules that, for purposes of discussion, may be illustrated and described as if the majority of the components were implemented solely in hardware. However, one of ordinary skill in the art, and based on a reading of this detailed description, would recognize that, in at least one implementation, the electronic-based aspects of the invention may be implemented in software (e.g., stored on non-transitory computer-readable medium) executable by one or more processors. As such, it should be noted that a plurality of hardware and software-based devices, as well as a plurality of different structural components may be utilized to implement the invention. For example, "control units" and "controllers" described in the specification can include one or more processors, one or more application specific integrated circuits (ASICs), one or more memory modules including non-transitory computer-readable media, one or more input/output interfaces, and various connections (e.g., a system bus) connecting the components.

It will be appreciated that some implementations may be comprised of one or more electronic processors such as microprocessors, digital signal processors, customized processors, and field programmable gate arrays (FPGAs) and unique stored program instructions (including both software and firmware) that control the one or more processors to implement, in conjunction with certain non-processor circuits, some, most, or all of the functions of the method and/or apparatus described herein. Alternatively, some or all functions could be implemented by a state machine that has no stored program instructions, or in one or more application specific integrated circuits (ASICs), in which each function or some combinations of certain of the functions are implemented as custom logic. Of course, a combination of the two approaches could be used.

Moreover, some implementations may be implemented as a computer-readable storage medium having computer readable code stored thereon for programming a computer (e.g., comprising an electronic processor) to perform a method as described and claimed herein. Examples of such computer-readable storage media include, but are not limited to, a hard disk, a CD-ROM, an optical storage device, a magnetic storage device, a ROM (Read Only Memory), a PROM (Programmable Read Only Memory), an EPROM (Erasable Programmable Read Only Memory), an EEPROM (Electrically Erasable Programmable Read Only Memory) and a Flash memory. Further, it is expected that one of ordinary skill, notwithstanding possibly significant effort and many design choices motivated by, for example, available time, current technology, and economic considerations, when guided by the concepts and principles disclosed herein will be readily capable of generating such software instructions and programs and ICs with minimal experimentation.

It should be understood that although certain drawings illustrate hardware and software located within particular devices, these depictions are for illustrative purposes only. In some examples, the illustrated components may be combined or divided into separate software, firmware and/or hardware. For example, instead of being located within and performed by a single electronic processor, logic and processing may be distributed among multiple electronic processors. Regardless of how they are combined or divided, hardware and software components may be located on the same computing device or may be distributed among multiple different devices. Accordingly, in the claims, if an apparatus, method, or system is claimed, for example, as including a controller, control unit, electronic processor, computing device, logic element, module, or other element configured in a certain manner, for example, to perform multiple functions, the claim or claim element should be interpreted as meaning one or more of such elements where any one of the one or more elements is configured as claimed, for example, to make any one or more of the recited multiple functions, such that the multiple elements, as a set in a collective nature, perform the multiple functions.

Various features, aspects, advantages, and examples are set forth in the following clauses and claims.

### CLAUSES

1. A product inventory management system for a facility, the system comprising:
   a radio frequency identification (RFID) tag, the RFID tag associated with at least one perishable product and storing a unique identifier of the at least one perishable product, and
   an electronic communications device including an RFID scanner and an electronic processor, the electronic processor configured to:
      receive, via the RFID scanner, the unique identifier from the RFID tag;
      identify, from the received unique identifier, expiration information for the at least one perishable product; and
      perform a mitigation action in response to identifying the at least one perishable product is expired based on the expiration information.
2. The system of clause 1, wherein the electronic processor is further configured to identify a location of the at least one perishable product based on a received order.
3. The system of clause 1 or 2, wherein the mitigation action includes requesting an order of a replacement perishable product based on the identified expired perishable product.
4. The system of clause 1, 2 or 3, wherein the mitigation action further includes generating an alert regarding the identified expired perishable product.
5. The system of any preceding clause, wherein the expiration information includes an expiration date of the perishable product.
6. The system of any preceding clause, wherein the expiration information includes a shelf life.
7. The system of any preceding clause, wherein the electronic processor is configured to receive additional information of the perishable product stored on the RFID tag via the RFID scanner, the additional information including a unique electronic product code (EPC) and a globally unique identifier (GUID).
8. The system of clause 7, wherein the EPC includes a stock-keeping unit, a receipt date and time, and a receipt location.
9. The system of any preceding clause, wherein the electronic processor is configured to identify the expiration information for the at least one product by accessing at least one database record associated with the unique identifier.
10. The system of any preceding clause, wherein the at least one RFID tag includes either or both of a passive RFID tag and an active RFID tag.
11. An electronic communications device for product inventory management for a facility, the electronic communications device comprising:
   a radio frequency identification (RFID) scanner, and
   an electronic processor configured to:
      receive, via the RFID scanner, a unique identifier from the RFID tag, the unique identifier corresponding to at least one perishable product;
      identify, from the received unique identifier, expiration information for the at least one perishable product; and
      perform a mitigation action in response to identifying the at least one perishable product is expired based on the expiration information.
12. The device of clause 11, wherein the electronic processor is further configured to identify a location of the at least one perishable product based on a received order.
13. The device of clause 11 or 12, wherein the mitigation action includes requesting an order of a replacement perishable product based on the identified expired perishable product.
14. The device of clause 11, 12 or 13, wherein the mitigation action further includes generating an alert regarding the identified expired perishable item.
15. The device of any one of clauses 11 to 14, wherein the expiration information includes an expiration date of the perishable product.
16. The device of any one of clauses 11 to 15, wherein the expiration information includes a shelf life.
17. The device of any one of clauses 11 to 16, wherein the electronic processor is further configured to receive additional information of the perishable product stored on the RFID tag via the RFID scanner, the additional information including a unique electronic product code (EPC) and a globally unique identifier (GUID).
18. The device of clause 17, wherein the EPC includes a stock-keeping unit, a receipt date and time, and a receipt location.
19. The device of any one of clauses 11 to 18, wherein the electronic processor is configured to identify the expiration information for the at least one perishable product by accessing at least one database record associated with the unique identifier.
20. A method for product inventory management for a facility, the method comprising:
   receiving, via a RFID scanner, a unique identifier from an RFID tag, the RFID tag storing a unique identifier corresponding to at least one perishable product;
   identifying, from the received unique identifier, expiration information for the at least one perishable product; and
   performing a mitigation action in response to identifying the at least one perishable product is expired based on the expiration information.

## Claims

1. A product inventory management system for a facility, the system comprising:
a radio frequency identification (RFID) tag, the RFID tag associated with at least one perishable product and storing a unique identifier of the at least one perishable product, and
an electronic communications device including an RFID scanner and an electronic processor, the electronic processor configured to:
receive, via the RFID scanner, the unique identifier from the RFID tag;
identify, from the received unique identifier, expiration information for the at least one perishable product; and
perform a mitigation action in response to identifying the at least one perishable product is expired based on the expiration information.

2. The system of claim 1, wherein the electronic processor is further configured to identify a location of the at least one perishable product based on a received order.

3. The system of claim 1 or 2, wherein the mitigation action includes requesting an order of a replacement perishable product based on the identified expired perishable product.

4. The system of claim 1, 2 or 3, wherein the mitigation action further includes generating an alert regarding the identified expired perishable product.

5. The system of any preceding claim, wherein the expiration information includes an expiration date of the perishable product.

6. The system of any preceding claim, wherein the expiration information includes a shelf life.

7. The system of any preceding claim, wherein the electronic processor is configured to receive additional information of the perishable product stored on the RFID tag via the RFID scanner, the additional information including a unique electronic product code (EPC) and a globally unique identifier (GUID); optionally wherein the EPC includes a stock-keeping unit, a receipt date and time, and a receipt location.

8. The system of any preceding claim, wherein:
(i) the electronic processor is configured to identify the expiration information for the at least one product by accessing at least one database record associated with the unique identifier; and/or
(ii) the at least one RFID tag includes either or both of a passive RFID tag and an active RFID tag.

9. An electronic communications device for product inventory management for a facility, the electronic communications device comprising:
a radio frequency identification (RFID) scanner, and
an electronic processor configured to:
receive, via the RFID scanner, a unique identifier from the RFID tag, the unique identifier corresponding to at least one perishable product;
identify, from the received unique identifier, expiration information for the at least one perishable product; and
perform a mitigation action in response to identifying the at least one perishable product is expired based on the expiration information.

10. The device of claim 9, wherein the electronic processor is further configured to identify a location of the at least one perishable product based on a received order.

11. The device of claim 9 or 10, wherein the mitigation action includes requesting an order of a replacement perishable product based on the identified expired perishable product.

12. The device of claim 9, 10 or 11, wherein the mitigation action further includes generating an alert regarding the identified expired perishable item.

13. The device of any one of claims 9 to 12, wherein:
(i) the expiration information includes an expiration date of the perishable product; and/or
(ii) the expiration information includes a shelf life.

14. The device of any one of claims 9 to 13, wherein:
(i) the electronic processor is further configured to receive additional information of the perishable product stored on the RFID tag via the RFID scanner, the additional information including a unique electronic product code (EPC) and a globally unique identifier (GUID); optionally wherein the EPC includes a stock-keeping unit, a receipt date and time, and a receipt location; and/or
(ii) the electronic processor is configured to identify the expiration information for the at least one perishable product by accessing at least one database record associated with the unique identifier.

15. A method for product inventory management for a facility, the method comprising:
receiving, via a RFID scanner, a unique identifier from an RFID tag, the RFID tag storing a unique identifier corresponding to at least one perishable product;
identifying, from the received unique identifier, expiration information for the at least one perishable product; and
performing a mitigation action in response to identifying the at least one perishable product is expired based on the expiration information.
